# EUROPÄISCHE PATENTSCHRIFT

(11) **EP 2 607 325 B1**
(45) Veröffentlichungstag und Bekanntmachung des Hinweises auf die Patenterteilung: **21.08.2019**
(21) Anmeldenummer: 12195986.0
(22) Anmeldetag: 07.12.2012
(51) Int. Cl.: C03B 19/14

(54) **Verfahren zum Herstellen von Stablinsen und Vorrichtung hierfür**
Method for producing rod lenses and device for same
Procédé de fabrication de lentilles cylindriques et dispositif prévu à cet effet

(30) Priorität: 23.12.2011 DE 102011122184; 12.01.2012 DE 102012000418
(43) Veröffentlichungstag der Anmeldung: 26.06.2013
(73) Patentinhaber: J-Plasma GmbH, 07751 Jena (DE)
(72) Erfinder: Brehm, Lothar, 07743 Jena (DE); Coriand, Frank, 07745 Jena (DE); Schmidt, Wolfgang, 07743 Jena (DE); Strobel, Ulrich, 07745 Jena (DE)
(74) Vertreter: Kruspig, Volkmar

(56) Entgegenhaltungen:
- EP-B1- 0 964 832
- DE-A1-102008 063 299
- DE-B3-102006 061 931
- GB-A- 2 083 806
- JP-A- 9 278 453
- JP-A- 59 078 947
- US-A- 5 908 482
- US-A1- 2002 144 517

## Beschreibung

Die Erfindung betrifft ein Verfahren zum Herstellen von Stablinsen mit einem umhüllenden Durchmesser der Stablinsenstirnseite von bis zu 200 mm und einer Kantenlänge von mindestens 800 mm nach Anspruch 1, die Verwendung eines Flammenhydrolyse-Verfahrens zum Herstellen eines zur Fertigung einer Stablinse verwendbaren Stablinsengrundkörpers nach Anspruch 4 und eine Vorrichtung zum Herstellen eines Stablinsengrundkörpers nach Anspruch 5.

Stablinsen sind optische Bauelemente und Einrichtungen, die aus einem langgestreckten transparenten, insbesondere aus Quarzglas bestehenden, Körper ausgebildet sind. Dieser Körper weist folgende typische geometrische Ausprägung auf: Kantenlänge (L) x Höhe (H) x Dicke (D), wobei die Lichteintritts- und -austrittsflächen durch L x H beschrieben werden und die Kantenlänge L um ein Vielfaches größer als die Höhe H ist. Bilden die Kantenmaße D und H die Katheten eines rechtwinkeligen Dreiecks, so ergibt sich daraus die Hypotenuse, die gleichzeitig den umhüllenden Durchmesser der Stablinsenstirnseite darstellt. Je nach Anwendung werden dabei die Lichteintritts- und -austrittsflächen als plane, konvexe oder konkave Funktionsflächen durch klassische optische Bearbeitung sowohl in L- als auch H- Richtung ausgebildet. Stablinsen finden ihre Anwendungen in Displaytechniken, LED-Lichtquellenanordnungen und optischen Abbildungseinrichtungen.

Zur Herstellung einer Stablinse wird zunächst ein Stablinsengrundkörper in Rohform, z.B. Vierkantstab gefertigt, der nachträglich durch Schleif- und Poliervorgänge die endgültige Form der Stablinse erhält. Der Stablinsenkörper aus synthetischen Quarzglas bzw. die aus ihm gefertigte Stablinse müssen über die gesamte Länge hinweg ein sehr hohes Maß an optischer Homogenität aufweisen. Sie müssen insbesondere frei von Blasen, Einschlüssen, Schichtungen und Schlieren sein. Des weiteren sollte das Quarzglas einen OH-Gehalt ≥ 1000 ppm und einem H₂- Gehalt ≥ 0,8 x 10¹⁸ Mol/ cm³ haben.

Um diese hohen optischen Anforderungen zu erreichen, wird üblicherweise auf Quarzglas aus mehrstufige Schmelzprozessen zurückgegriffen. Das heißt, ein vorgefertigter Quarzglaskörper wird durch Homogenisierungsschritte (DE 10 2005 043 289 B3) und/ oder zusätzliche Beladung von H₂ (DE 696 13 268 T3) aufwendig nachbehandelt. Die dabei entstehenden Quarzglaszylinder müssen anschließend in einem zusätzlichen Prozess thermisch umformt werden. Das heißt, das Glasmaterial wird in eine beispielsweise aus Graphit bestehende Form gegeben und anschließend in einem Senkofen auf eine Erweichungs- oder Fließtemperatur gebracht. Das Glasmaterial senkt sich dadurch in die Form ein. Bei flachen Formen wird eine Glasfläche (Senkblock) geschaffen, der anschließend in einzelne Stablinsenkörper vereinzelt wird. Aufgrund der extremen Stablinsengeometrie (L um vielfaches größer als H) sind Mehrfachsenkungen erforderlich, bis die abschließend gewünschte Form des Stablinsenkörpers erreicht ist.

Oben genanntes Senkverfahren erfordert eine genaue Kontrolle der Lage der Inhomogenitäten innerhalb der Glaszylinder. Es muss unbedingt sichergestellt sein, dass die im Quarzglaszylinder vorhandenen Inhomogenitäten, insbesondere mögliche Schichtungen, bei den Senkvorgängen ihre Richtung nicht ändern, damit die in der fertigen Stablinse vorgegebene Ausbreitungsrichtung des Lichtes senkrecht zu diesen Schichtungen orientiert bleibt und somit die Stablinse in ihrer Lichtdurchstrahlungsrichtung (D) über die gesamte Kantenlänge nicht beeinflusst ist.

Durch die in den letzten Jahren neu aufgekommenen optischen Bauelemente, insbesondere organische LED (so genannte OLEDs), werden relativ lange und im Verhältnis zur Höhe relativ schmale Stablinsen benötigt. Diese Stablinsen weisen eine Kantenlänge von ca. 800 mm und mehr auf. Weiterhin müssen Stablinsen, die einer intensiven Lasereinstrahlung ausgesetzt sind eine möglichst geringe Fluoreszenz innerhalb des Linsenkörpers aufweisen. In Verbindung damit ist für verschiedene Einsatzzwecke ein hoher Transmissionsgrad des Linsenkörpers im ultravioletten Spektralbereich notwendig.

Es zeigt sich, dass Stablinsen mit den geforderten Eigenschaften im Senkverfahren nur sehr aufwändig und nur innerhalb einer langen Fertigungszeit hergestellt werden können. So bereitet vor allem die genaue Kontrolle der gleichbleibenden optischen Eigenschaften über die große Länge des Stablinsenkörpers Probleme. Durch die hohen Temperaturen beim Senkprozess von 1700 °C und mehr kommt es sehr häufig zu unerwünschten Veränderungen in den Materialeigenschaften der Glaswerkstoffe. Der Kontakt mit der Graphitform begünstigt ebenfalls unkontrollierte Eigenschaftsänderungen des Glases. Längere Stablinsenkörper können außerdem nur mehrstufig und damit zeitraubend erzeugt werden. Hinzu kommt, dass am letzten Senkblock aufwändige Nachbearbeitungen mit zum Teil erheblichen Materialverlusten ausgeführt werden müssen. Weiterhin weisen die Graphitformen nur eine begrenzte Lebensdauer auf. Deren Herstellung ist zudem teuer. Außerdem lässt sich die Qualität des Glaswerkstoffes und die erfolgreiche Ausführung des Senkverfahrens praktisch erst an der fertigen Stablinse überprüfen.

Es besteht daher die Aufgabe, ein Verfahren zum Herstellen von Stablinsen anzugeben, mit dem es möglich ist, Stablinsen, insbesondere mit größerer Kantenlänge von mindestens 800 mm kostengünstig und mit einem deutlich reduzierten zeitlichen Aufwand herzustellen, wobei die erzeugten Stablinsen vorteilhafte optische Eigenschaften beim Beaufschlagen mit intensiver Laserstrahlung aufweisen sollen.

Die Aufgabe wird mit einem Verfahren zum Herstellen von Stablinsen mit einem umhüllenden Durchmesser der Stablinsenstirnseite von bis zu 200 mm und einer Kantenlänge von mindestens 800 mm nach der Lehre des Anspruchs 1 gelöst. Die Aufgabe wird weiterhin durch die Merkmale des Verwendungsanspruchs 4 und hinsichtlich des Vorrichtungsaspektes mit einer Lehre nach den Merkmalen des Anspruchs 5 gelöst.

Das Verfahren gemäß Anspruch 1 zeichnet sich erfindungsgemäß dadurch aus, dass ein aus einem synthetischen Quarzglasmaterial in Form eines Fused Silica Ingots bestehender Stablinsengrundkörper unter Anwendung eines Flammenhydrolyse-Verfahrens gefertigt wird. Es erfolgt dabei ein direkter einstufiger Abscheideprozess von SiOₓ-Partikeln aus einem Flammenstrom auf einen rotierenden und verschiebbaren Stempel.

Ein derartiges Verfahren ist bereits aus der Herstellung von vergleichsweise kurzen und dicken Quarzglaszylindern und dergleichen Halbzeugen bekannt. Diese werden bevorzugt zu Optikbauteilen Wafer und lithographischen Komponenten weiterverarbeitet, wobei es vor allem auf eine einwandfreie und definierte Materialstruktur entlang der optischen Funktionsrichtung des Halbzeugs bzw. der Optikkomponente ankommt.

Überraschenderweise hat sich herausgestellt, dass sich Stablinsengrundkörper der erwähnten Länge und Dicke unter Anwendung des Flammenhydrolyse-Verfahrens fertigen lassen, wobei sich insbesondere zeigt, dass die dann erhaltenen Stablinsenkörper nicht nur im Querschnitt, sondern darüber hinaus über ihre gesamte Länge frei von Inhomogenitäten sind. Dies war bisher nicht zu erwarten, weil das Flammenhydrolyse-Verfahren gerade nicht auf die Herstellung von in Längsrichtung inhomogenitätsfreien Halbzeugen abzielt und daher auch zur Fertigung von langen Stablinsenkörpern nicht angewendet wird. Jedoch haben sich gerade die mit diesem Verfahren gefertigten verhältnismäßig langen und schmalen Stablinsenkörper hervorragend als Ausgangsmaterial für die weitere Verarbeitung zur fertigen Stablinse erwiesen. Dies ist vor allem deswegen von Bedeutung, weil sich mit einem solchen Verfahren Stablinsenkörper mit ausgezeichneten optischen Eigenschaften mit einer vergleichsweise großen Kantenlänge in einer im Verhältnis zum bisher verwendeten Senkverfahren kurzen Zeit in einem kontinuierlichen Prozess und somit quasi "am Fließband" exakt herstellen lassen.

Bei einer zweckmäßigen Ausbildung des Verfahrens weist das in dem Abscheideprozess abgeschiedene synthetische Quarzglas einen OH-Anteil von mehr als 1000 ppm auf. Es handelt sich also um synthetisches Quarzglas mit einem vergleichsweise hohen Anteil an OH-Gruppen und Wasserstoff, bei dem die laserinduzierte Fluoreszenz unterdrückt ist.

Bei einer weiteren Ausführungsform wird das Verfahren in der Weise ausgeführt, dass das in dem Abscheideprozess abgeschiedene synthetische Quarzglas ein maximales Transmissionsvermögen für ultraviolette Strahlung im Wellenlängenbereich von ca. 193 bis 400 nm aufweist.

Ein weiterer Aspekt der Erfindung besteht im Verwenden eines Flammenhydrolyse-Verfahrens mit einem direkten einstufigen Abscheideprozess von SiOₓ-Partikeln aus einem Flammenstrom auf einen rotierenden und verschiebbaren Stempel zum Fertigen eines Stablinsenkörpers zur Herstellung einer Stablinse.

Bei einer Vorrichtung zum Herstellen eines Stablinsenkörpers mit einem umhüllenden Durchmesser der Stablinsenstirnseite von bis zu 200 mm und einer Kantenlänge von mindestens 800 mm ist ein Muffelofen mit einer mehrschaligen röhren- oder tunnelförmigen Muffel, einem aus einer ersten Seite in die Muffel hinein geführten Brenner mit einer Zuleitung für ein siliziumhaltiges Reaktionsmittel und einem dem Brenner gegenüber liegenden, verschiebbaren Stempel vorgesehen. Die Vorrichtung zeichnet sich dadurch aus, dass die Muffel eine Muffelgeometrie mit einem Abstand zwischen der Mantelfläche eines gebildeten FS-Ingots und der Innenwand der Muffel im Bereich von 40 bis 75 mm und einem Abstand zwischen der Muffel und der Aufschmelzfläche des FS-Ingots von 10 bis 25 mm aufweist und die Muffel eine abluftgeregelte Ofenraumtemperatur von 1100 bis 1300 °C besitzt.

Als weitere Ausgestaltung weist die Muffel eine temperaturstabilisierende, seitliche Ofenraumverlängerung mit einer Länge von mindestens 50 mm auf.

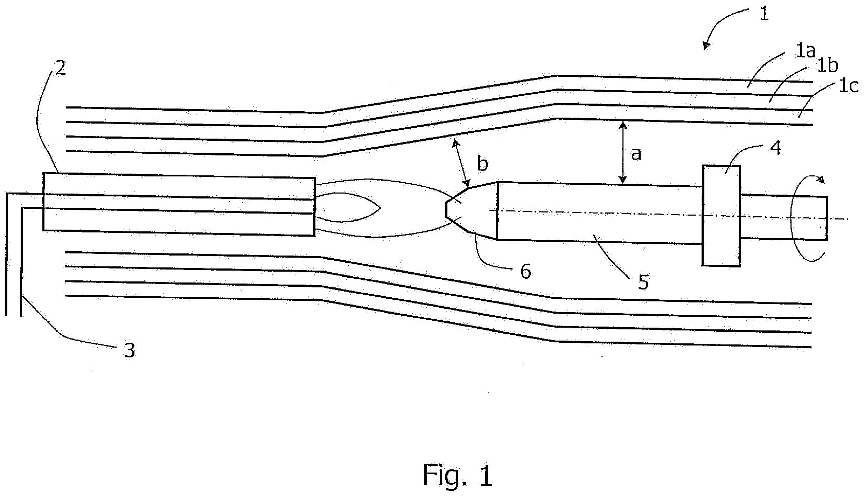

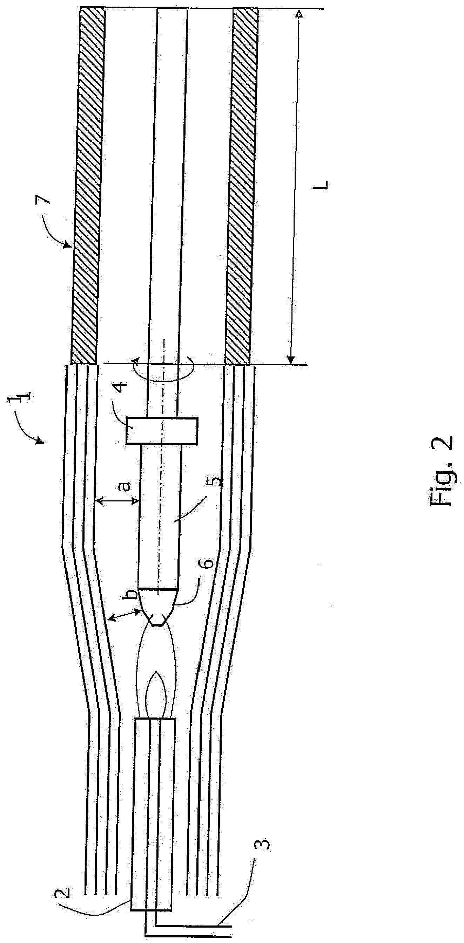

Die Erfindung soll nachfolgend anhand eines Ausführungsbeispiels näher erläutert werden. Zur Verdeutlichung dienen die Figuren 1 und 2. Es werden für gleiche oder gleichwirkende Teile die selben Bezugszeichen verwendet. Es zeigt:
- Fig. 1: einen grundsätzlichen Muffelaufbau,
- Fig. 2: eine Darstellung einer Ofenraumverlängerung.

Das vorgeschlagene Flammenhydrolyse-Verfahren wird in einem Muffelofen ausgeführt. Dieser weist die für derartige Öfen an sich bekannte Gestaltung auf. Er besteht aus einer röhren- oder tunnelartigen Muffel 1, in welcher der Abscheidevorgang stattfindet.

Bevorzugt wird für die Muffel auf einen mehrschaligen Wandaufbau aus einem porösen wärmedämmenden Material 1a, insbesondere einem faserigen und/oder keramischen Material, einer Beton- oder Schamotte-Wand 1b und einer inneren Auskleidung 1c aus einem gegenüber hohen Temperaturen hinreichend widerstandsfähigen Material, insbesondere Aluminiumoxid oder Siliziumcarbid, zurückgegriffen.

Die Muffel 1 weist an ihren Enden jeweils eine Öffnung auf. Eine der beiden Öffnungen dient dem Einführen eines Stempels 4. Die gegenüberliegende Öffnung weist einen dort eingeführten Brenner 2 auf, der mehrflammig ausgebildet sein kann. Der Brenner 2 ist mit einer Zuleitung 3 für ein siliziumhaltiges Reaktionsmittel ausgestattet, das in gasförmiger Form in den Brennbereich geführt und dort zu Siliziumoxiden SiOₓ oxidiert wird. Die dabei gebildeten SiOₓ-Partikel werden im Flammenstrom in Richtung des Stempels 4 getrieben und lagern sich auf dem Stempel ab. Der Stempel 4 ist drehbar gelagert, sodass eine gleichmäßige Bedeckung der Stempeloberfläche mit dem Partikelstrom erfolgt. Dadurch bildet sich auf der Oberfläche des Stempels 4 eine wachsende Schicht aus synthetisch erzeugtem Quarzglas in Form eines Fused Silica Ingots (FS-Ingot) 5.

Die Prozessführung erfolgt nun so, dass der Abstand zwischen dem Flammenbereich des Brenners 2 und der Oberfläche der sich bildenden Quarzglasschicht im Wesentlichen gleich bleibt. Hierzu wird z.B. der Stempel 4 mit einer kontinuierlichen Geschwindigkeit zurückgezogen, sodass sich auf dem Stempel 4 ein Quarzglaszylinder bzw. das FS-Ingot 5 mit einer zunehmenden Länge ausbildet. Es stellt den sich bildenden Stablinsengrundkörper dar, der unmittelbar im Anschluss des Abscheideprozesses entnommen, gekühlt, geprüft und danach direkt als Halbzeug zur Fertigung von einer oder mehrerer Stablinsen verwendet werden kann.

Das Verfahren gewährleistet eine hohe Temperaturkonstanz über den gesamten Abscheidevorgang und für große Bereiche des Stablinsenkörpers. Wichtig ist hier eine möglichst große Aufschmelzlänge im FS-Ingot, bei der sich Inhomogenitäten in dessen Längsrichtung wirkungsvoll vermeiden lassen. Zweckmäßig haben sich hier Ofenraumtemperaturen im Bereich von 1100 bis 1300 °C erwiesen, wobei die Temperatur über eine Einstellung und Überwachung der Ablufttemperatur geregelt wird. Dabei erweist sich eine Ablufttemperatur von 230 bis 270 °C als zweckmäßig.

Der Abstand b zwischen der Muffelinnenwand und der Aufschmelzfläche des abgeschiedenen FS-Ingots wird zweckmäßigerweise über eine Lichtschrankenüberwachung konstant gehalten. Als zweckmäßig haben sich hier Abstände von 10 bis 25 mm erwiesen.

Vorteilhaft ist auch die Einstellung und Vorwahl eines reproduzierbaren Reaktionsraumvolumens zwischen dem sich herausbildenden FS-Ingot und der Muffelinnenseite. Hier kommen jeweils verschiedene Muffelgeometrien zum Einsatz, die einen Abstand a zwischen der Mantelfläche des FS-Ingots und der Muffelinnenwand im Bereich von 40 bis 75 mm gewährleisten.

Zweckmäßig ist in diesem Zusammenhang eine angepasste und veränderbar ausgeführte Verlängerung 7 des Ofenraumes, die an die eigentliche Muffel 1 seitlich anschließt. Eine derartige Ofenraumverlängerung ist in Fig. 2 dargestellt. Diese trägt zusätzlich zur Temperaturkonstanz im Muffelraum bei. Die Verlängerung weist z.B. eine Länge L von ca. 50 bis ca. 250 mm auf.

Es hat sich gezeigt, dass mit dem oben genannten Verfahren vor allem Stablinsenkörper mit einem großen Verhältnis zwischen Kantenlänge und Höhe/ Dicke gefertigt werden können. Typische Längen des Stablinsenkörpers liegen bei mindestens 800 mm und können problemlos bis zu 1500 mm und mehr betragen. Damit ist die Kantenlänge L um ein Vielfaches größer als die Höhe H oder Dicke D bei vergleichsweise üblichen Stablinsen.

Das synthetische Quarzglas des fertigen Stablinsenkörpers ist über dessen gesamte Länge völlig homogen ohne Blasen, Schichtungen, Einschlüsse und Schlieren. Es weist einen hohen Gehalt an OH-Gruppen von mindestens 1000 ppm, insbesondere von 1200 ppm und mehr auf. Der Gehalt an molekularem Wasserstoff H₂ liegt oberhalb von 0,8 · 10¹⁸ Moleküle/cm³, typischerweise bei 1,2 · 10¹⁸ Moleküle/cm³. Der Wert der Spannungsdoppelbrechung ist kleiner als 5 nm/cm und liegt meist unterhalb von 3 nm/cm. In axialer Richtung wird eine hohe Brechzahlhomogenität mit einer Abweichung von 4 · 10⁻⁶ und weniger erreicht. Der Glaswerkstoff weist über dessen gesamte Länge ein maximales Transmissionsvermögen für Licht im ultravioletten Spektralbereich, d.h. im Bereich von ca. 193 bis 400 nm. Zugleich werden dadurch unerwünschte Fluoreszenzen unter der Einwirkung von eingestrahltem Laserlicht in der fertigen Stablinse unterdrückt.

Es lassen sich problemlos aus einem erfindungsgemäßen Quarzglaszylinder (Stablinsengrundkörper) zwei oder mehrere Stablinsen fertigen, die hinsichtlich ihrer Materialeigenschaften praktisch identisch sind, unabhängig davon, aus welchem Abschnitt des ursprünglichen Zylinders die schließlich vorliegende Stablinse herausgeschnitten worden ist.

Die Erfindung wurde anhand beispielhafter Ausführungsformen erläutert. Im Rahmen fachmännischen Handelns sind weitere Ausführungsformen möglich. Diese ergeben sich ebenso aus den Unteransprüchen.

### Bezugszeichenliste

- 1: Muffel
- 1a: wärmedämmendes Material
- 1b: Beton oder Schamotte-Wand
- 1c: innere Auskleidung
- 2: Brenner
- 3: Zuleitung für Reaktionsmittel
- 4: Stempel
- 5: FS-Ingot
- 6: Aufschmelzfläche
- 7: Ofenraumverlängerung
- a: Abstand Mantelfläche FS-Ingot zu Muffelinnenwand
- b: Abstand Aufschmelzfläche zu Muffelinnenwand
- L: Länge der Ofenraumverlängerung

## Patentansprüche

1. Verfahren zum Herstellen von Stablinsen mit einer Dicke D und einer Höhe H, wobei die Dicke und die Höhe Katheten eines rechtwinkeligen Dreiecks bilden und die sich daraus ergebende Hypothenuse als umhüllender Durchmesser bezeichnet wird mit einem umhüllenden Durchmesser der Stablinsenstirnseite von bis zu 200 mm und einer Kantenlänge von mindestens 800 mm,
**gekennzeichnet durch**
eine Fertigung des Stablinsengrundkörpers aus einem synthetischen Quarzglasmaterial in Form eines Fused Silica Ingots auf der Basis eines Flammenhydrolyse-Verfahrens mit direktem einstufigen Abscheideprozess von SiOₓ-Partikeln aus einem Flammenstrom auf einen rotierenden und bezogen auf den Flammenstrom verschiebbaren Stempel in einem direkten Schmelzverfahren, mit den Verfahrensschritten
- Zurückziehen eines Stempels mit einer kontinuierlichen Geschwindigkeit, wobei sich auf dem Stempel ein Quarzglaszylinder als Stablinsengrundkörper mit einer zunehmenden Länge ausbildet,
- wobei der Abscheideprozess bei einer Ofenraumtemperatur im Bereich von 1100 bis 1300 °C ausgeführt wird und ein Abstand (b) zwischen einer Muffelinnenwand und einer Aufschmelzfläche des abgeschiedenen FS-Ingots in einem Abstandsbereich von 10 bis 25 mm konstant gehalten wird,
- wobei eine Vorwahl und Einstellung eines reproduzierbaren Reaktionsraumvolumens zwischen dem sich herausbildenden FS-Ingot und der Muffelinnenseite über eine Muffelgeometrie erfolgt, bei der ein Abstand (a) zwischen der Mantelfläche des FS-Ingots und der Muffelinnenwand im Bereich von 40 bis 75 mm gewährleistet ist,
- Unmittelbar im Anschluss des Abscheideprozesses Entnehmen, Kühlen und Prüfen des Stablinsengrundkörpers, wobei
- der Stablinsengrundkörper direkt als Halbzeug zur Fertigung von einer oder mehrerer Stablinsen verwendet wird.

2. Verfahren nach Anspruch 1,
**dadurch gekennzeichnet, dass**
in dem Abscheideprozess eine synthetische Quarzglasmaterialmenge mit einem OH-Anteil von mehr als 1000 ppm und/oder einen H₂-Anteil von mehr als 0,8 · 10¹⁸ Molekülen/cm³, typischerweise 1,2 · 10¹⁸ Moleküle/cm³ abgeschieden wird.

3. Verfahren nach einem der vorhergehenden Ansprüche,
**dadurch gekennzeichnet, dass**
in dem Abscheideprozess eine synthetische Quarzglasmaterialmenge mit einem maximalen Transmissionsvermögen für ultraviolette Strahlung im Wellenlängenbereich von 193 bis 400 nm abgeschieden wird.

4. Verwenden eines Flammenhydrolyse-Verfahrens mit direktem einstufigen Abscheideprozess von SiOₓ-Partikeln aus einem Flammenstrom auf einen rotierenden und verschiebbaren Stempel zum Fertigen eines zur Herstellung einer Stablinse geeigneten Zylinderkörpers,
- wobei der Abscheideprozess bei einer Ofenraumtemperatur im Bereich von 1100 bis 1300 °C ausgeführt wird und ein Abstand (b) zwischen einer Muffelinnenwand und einer Aufschmelzfläche des abgeschiedenen FS-Ingots in einem Abstandsbereich von 10 bis 25 mm konstant gehalten wird,
- wobei eine Vorwahl und Einstellung eines reproduzierbaren Reaktionsraumvolumens zwischen dem sich herausbildenden FS-Ingot und der Muffelinnenseite über eine Muffelgeometrie erfolgt, bei der ein Abstand (a) zwischen der Mantelfläche des FS-Ingots und der Muffelinnenwand im Bereich von 40 bis 75 mm gewährleistet.

5. Vorrichtung zum Herstellen eines Stablinsengrundkörpers in Zylinderform umfassend einen Muffelofen mit einer mehrschaligen röhren- oder tunnelförmigen Muffel (1), einem auf einer ersten Seite in die Muffel hinein geführten Brenner (2) mit einer Zuleitung (3) für ein siliziumhaltiges Reaktionsmittel und einem, auf einer zweiten Seite der Muffel, dem Brenner gegenüberliegenden Seite verschiebbaren Stempel (4),
**dadurch gekennzeichnet, dass**
die Muffel eine Muffelgeometrie aufweist, bei der ein Abstand (a) zwischen der Mantelfläche des sich bildenden Stablinsengrundkörpers (5) und der Innenwand der Muffel im Bereich von 40 bis 75 mm und ein Abstand (b) zwischen der Muffel und der Aufschmelzfläche (6) des Grundkörpers (5) von 10 bis 25 mm gewährleistet ist und mit der Muffel eine abluftgeregelte Ofenraumtemperatur von 1100 bis 1300 °C erreichbar ist.

6. Vorrichtung nach Anspruch 5,
**dadurch gekennzeichnet, dass**
die Muffel eine temperaturstabilisierende Ofenraumverlängerung (7) mit einer Länge von mindestens 50 mm aufweist.

## Claims

1. A method for producing rod lenses with a thickness D and a height H wherein the thickness and the height form cathetus of a rectangular triangle and the resultant hypotenuse is designated as an enveloping diameter wherein an enveloping diameter of rod lens face is up to 200 mm and has an edge length of at least 800 mm,
**characterized in that**
a rod lens base element is fabricated from a synthetic quartz glass material configured as a fused silica ingot using a flame hydrolysis method with a direct single stage precipitation process of SiOₓ particles from a flame stream onto a rotating plunger that is movable with respect to the flame stream using a direct melting method with the process steps:
- retracting the plunger with a continuous velocity, wherein a quartz glass cylinder is formed on the plunger as a rod lens base element with increasing length,
- wherein the precipitation process is performed at an oven cavity temperature in a range of 1100 to 1300° C and a distance (b) between an interior muffle wall and a melting surface of the precipitated FS-ingot is maintained constant in a range of 10 to 25 mm,
- wherein a preselection and adjustment of a reproducible reaction space volume between the forming FS-ingot and the inside of the muffle is performed by a muffle geometry where a distance (a) between the enveloping surface of the FS-ingot and the interior muffle wall is maintained in a range of 40 to 75 mm,
- immediately after the precipitation process removing, cooling and checking of the rod lens base element,
- wherein the rod lens base element is used as a semi finishing product for fabricating one or plural rod lenses.

2. The method according to claim 1,
**characterized in that**
a synthetic volume of quartz glass material is precipitated in the precipitation process with an OH portion of more than 1,000 ppm and/or a H₂ portion of more than 0.8 x 10¹⁸ molecules / cm³, typically 1.2 x 10¹⁸ molecules / cm³.

3. The method according to one of the preceding claims,
**characterized in that**
a synthetic quartz material volume with a maximum transmissivity for ultra violet radiation is precipitated in a wave length range of 193 to 400 nm in the precipitation process.

4. A use of a flame hydrolysis method with a direct single stage precipitation process of SiOₓ particles from a flame stream onto a rotating movable plunger for fabricating a cylindrical element that is configured for producing a rod lens,
- wherein the precipitation process is performed at an oven cavity temperature in a range of 1100 to 1300 °C and a distance (b) between an interior muffle wall and a melting surface of the precipitated FS - ingot is maintained constant in a distance range of 10 - 25 mm,
- wherein a preselection and adjustment of a reproducible reaction space volume between the forming FS - ingot and the inside of the muffle is performed by a muffle geometry wherein a distance (a) between the enveloping surface of the FS-ingot and the inside muffle wall is maintained in a range of 40 to 75 mm.

5. A device for producing a cylindrical rod lens base element, comprising a muffle kiln with a multi-shell tubular or tunnel shaped muffle (1), a burner (2) run into the muffle on a first side with a feed (3) for a reactive agent that contains silicone and a plunger (4) that is movably arranged on a second side of the muffle that is arranged opposite to the burner, **characterized in that**
the muffle has a muffle geometry where a distance (a) between an enveloping surface of the forming rod lens base element (5) and the interior wall of the muffle is in a range of 4 mm to 75 mm and a distance (b) between the muffle and a melting surface (6) of the base element (5) is kept constant in a range of 10 - 25 mm and wherein the muffle facilitates reaching a kiln cavity temperature between 1,100 and 1,300 °C controlled by an exhaust gas flow.

6. The device according to claim 5, **characterized in that** the muffle has a temperature stabilizing kiln cavity extension (7) with a length of at least 50 mm.

## Revendications

1. Procédé de fabrication de lentilles cylindriques ayant une épaisseur D et une hauteur H, dans lequel l'épaisseur et la hauteur forment des cathètes d'un triangle rectangle et l'hypoténuse résultante est appelée diamètre enveloppant, tel qu'un diamètre enveloppant de la face frontale de la lentille cylindrique peut atteindre 200 mm et une longueur de bord d'au moins 800 mm,
**caractérisé par**
une fabrication du corps de base de lentille cylindrique en verre de quartz synthétique sous la forme d'un lingot de silice fondue sur la base d'un procédé d'hydrolyse à la flamme avec dépôt direct en une seule étape de particules de SiOₓ provenant d'un flux de flamme sur un poinçon rotatif et mobile en translation par rapport au flux de flamme dans un procédé de fusion directe, comprenant les étapes suivantes :
- on recule un poinçon à une vitesse continue, un cylindre en verre de quartz se formant sur le poinçon sous la forme d'un corps de base de lentille cylindrique ayant une longueur croissante,
- le processus de dépôt est effectué à une température de foyer dans la plage de 1100 à 1300 °C, et une distance (b) entre une paroi interne de moufle et une surface de fusion du lingot FS déposé est maintenue constante dans une plage de distance de 10 à 25 mm,
- on effectue une présélection et un réglage d'un volume d'espace de réaction reproductible entre le lingot FS en cours de formation et le côté intérieur de moufle par l'intermédiaire d'une géométrie de moufle dans laquelle une distance (a) entre la surface enveloppe du lingot FS et la paroi intérieure de moufle est assurée dans la plage de 40 à 75 mm,
- immédiatement après le processus de déposition, on enlève, on fait refroidir et on inspecte le corps de base de lentille cylindrique,
- le corps de base de lentille cylindrique est utilisé directement comme produit semi-fini pour la fabrication d'une ou plusieurs lentilles cylindriques.

2. Procédé selon la revendication 1,
**caractérisé en ce que**
au cours du processus de dépôt, on dépose une quantité de verre de quartz synthétique d'une teneur en OH supérieure à 1000 ppm et/ou d'une teneur en H₂ supérieure à 0,8 • 10¹⁸ molécules/cm³, typiquement de 1,2 • 10¹⁸ molécules/cm³.

3. Procédé selon l'une des revendications précédentes,
**caractérisé en ce que**
au cours du processus de dépôt, on dépose une quantité de verre de quartz synthétique ayant une capacité de transmission maximale pour le rayonnement ultraviolet dans la gamme de longueurs d'onde de 193 à 400 nm.

4. Utilisation d'un procédé d'hydrolyse à la flamme avec dépôt direct en une seule étape de particules de SiOₓ provenant d'un flux de flamme sur un poinçon rotatif et mobile en translation pour la fabrication d'un corps cylindrique apte à la réalisation d'une lentille cylindrique, dans laquelle
- le processus de dépôt est effectué à une température de foyer dans la plage de 1100 à 1300 °C, et une distance (b) entre une paroi interne de moufle et une surface de fusion du lingot FS déposé est maintenue constante dans une plage de distance de 10 à 25 mm,
- une présélection et un réglage d'un volume d'espace de réaction reproductible entre le lingot FS en cours de formation et le côté intérieur de moufle s'effectuent par l'intermédiaire d'une géométrie de moufle dans laquelle une distance (a) entre la surface enveloppe du lingot FS et la paroi intérieure de moufle est assurée dans la plage de 40 à 75 mm.

5. Dispositif de réalisation d'un corps de base de forme cylindrique pour une lentille cylindrique, comprenant un four à moufle pourvu d'un moufle (1) tubulaire ou en forme de tunnel ayant plusieurs coques, un brûleur (2) introduit dans le moufle sur un côté et pourvu d'un conduit d'alimentation (3) pour un agent réactif contenant du silicium, et un poinçon (4) mobile en translation sur le second côté du moufle opposé au brûleur,
**caractérisé en ce que**
le moufle présente une géométrie de moufle dans laquelle une distance (a) entre la surface enveloppe du corps de base de lentille cylindrique (5) en cours de formation et la paroi intérieure du moufle dans la plage de 40 à 75 mm et une distance (b) entre le moufle et la surface de fusion (6) du corps de base (5) de 10 à 25 mm sont assurées, le moufle permettant d'atteindre une température du foyer contrôlée par l'air d'échappement de 1100 à 1300 °C.

6. Dispositif selon la revendication 5,
**caractérisé en ce que**
le moufle comprend un prolongement (7) du foyer qui stabilise la température et qui présente une longueur d'au moins 50 mm.
